# EUROPEAN PATENT APPLICATION

(11) **EP 4 778 894 A1**
(43) Date of publication of application: **22.07.2026**
(21) Application number: 25716485.5
(22) Date of filing: 19.03.2025
(51) Int. Cl.: C02F 9/20, B01D 21/00, B01D 21/28, B01D 21/30, C02F 1/52, C02F 1/74

(54) **MINIATURIZED WATER TREATMENT STATION**

(30) Priority: 19.03.2024 PT 2024119331; 20.03.2024 PT 2024119334; 07.06.2024 PT 2024119517; 07.11.2024 EP 24211560
(71) Applicant: Ark - Indústria, Lda, 4430-059 Vila Nova de Gaia (PT)
(72) Inventor: AIRES PEREIRA COSTA, Nelson, 4430-059 VILA NOVA DE GAIA (PT)
(74) Representative: do Nascimento Gomes, Rui
(86) International application number: PCT/IB2025/052871
(87) International publication number: WO 2025/196656

(57) **Abstract**

The present disclosure falls within the technical area of miniaturized systems, in a laboratory and/or experimental context, defining a water treatment station. The station of the present disclosure and the elements contained therein are miniaturized when compared to large dimensioned plants, as are the water treatment plants, as part of major infrastructures. The station of the present solution permits, in an innovative way, to investigate and to treat, chemically and biologically contaminated waters and to operate this treatment, in a miniaturised structure containing at least two reservoirs, wherein the second reservoir (B202) comprises at least one water inlet and one water outlet and the first reservoir (B201) comprises at least one water inlet and one water outlet, the water outlet being formed in a side section of the first reservoir (B201).

## Description

### FIELD OF DISCLOSURE

The present disclosure falls within the technical area of miniaturized systems, in a laboratory and/or experimental context, defining a water treatment station. The station of the present disclosure and the elements it contains are miniaturized when compared to large size plants, like water treatment plants, when they are part of major infrastructures.

### STATE OF THE ART

A number of solutions seeking to simulate the operation of water treatment plants for educational purposes are known in the state of the art.

These solutions simulate the operation of plants, including the elements that, for instance, pretend to represent contaminants, but which are not contaminants, consisting only of fictitious elements by which one tries to demonstrate how the treatment plants operate, generally within a learning context.

These systems are not functional and do not allow an effective treatment of water, at least no more than removing these fictitious elements from the water or showing, by other means, how a water treatment plant would operate. These plants do not allow for laboratory development and research.

Therefore, they do not require their components to work effectively to treat water in general.

The miniaturized station of the present solution allows to treat, test and control, in an efficient manner, new models for the treatment of contaminated water, in an innovative way, within an environment of scientifical development, research and learning.

### SUMMARY OF THE DISCLOSURE

The present disclosure includes a miniaturized water treatment station, such station including at least two reservoirs suitable to contain liquids, a first reservoir and a second reservoir, wherein:
the second reservoir comprises at least one water inlet and one water outlet,
the first reservoir comprises at least one water inlet and one water outlet, the water outlet being formed on a side section of the first reservoir, and further comprising a waste outlet, the waste outlet being formed in a lower section of the first reservoir and being suitable for the removal of the waste deposited at least by gravitational action, the first reservoir water outlet is connected to the water inlet of the second reservoir, and wherein the water outlet of the second reservoir is connected to a water outlet of the station,

the station comprises a first valve and a first pump, the first valve being controllable and allowing the water to flow inside the first reservoir, and the first pump being controllable, a pumping of the first pump being performed from a water inlet of the station to the water inlet of the first reservoir, the station further comprising a third valve, the third valve being controllable and allowing water to flow from of the first reservoir to the inlet of the second reservoir, and
wherein each of the reservoirs has a capacity between 4 and 50 I.

The water flowing out of the first reservoir to the inlet of the second reservoir occurs by gravitational action, when the third valve is open.

The station may be configured to, after a reaction has been completed inside the first reservoir (B201) and a product of that reaction has settled at the bottom of the first reservoir (B201), the third valve (V203) opens so that the treated water for contaminants flows from the first reservoir (B201) to the second reservoir (B202).

The station may additionally comprise a second valve, the second valve being controllable and allowing the waste deposited at the bottom of the first reservoir to exit through the waste outlet and into a waste outlet of the station, the station being configured for the second valve to allow the waste to exit after the third valve allows water to flow out.

The station may additionally comprise a first drainage outlet, a fourth valve and a fifth valve, the first drainage outlet being connected to the outlet of the second reservoir, the fourth valve being controllable and allowing the water to flow from of the second reservoir to the first drainage outlet when the fifth valve is closed and the fourth valve is open. The fifth valve is controllable and allows the water to flow through the outlet of the second reservoir into the water outlet of the station when the fifth valve is open and the fourth valve is closed.

The station may additionally comprise one flow meter arranged between the water inlet of the station and the first reservoir, the first pump pumping water according to at least one value obtained by the flow meter.

The station may additionally comprise means to determine the water volume contained inside the second reservoir. Optionally, the means to determine the water volume inside the second reservoir may comprise a level sensor arranged at the outlet of the second reservoir and configured to determine the hydrostatic water pressure inside the second reservoir, determining the water volume contained inside the second reservoir based on a hydrostatic water pressure value obtained by the level sensor.

The station may additionally comprise an aeration pump arranged inside the second reservoir such that, when the water is inside the second reservoir, the air of the aeration pump contacts the water.

The station may additionally comprise mechanical stirring means, controllable by electronic means and arranged inside the first reservoir as a facilitator means for a chemical process to be performed inside the first reservoir. While performing an experiment, a chemical reagent is added to a solution of contaminated water inside the first reservoir, and the stirring means stir the mixture - in contact with the medium inside the first reservoir -, promoting the chemical process (for instance, a precipitation and coagulation-flocculation process), further permitting the optimization of the reaction and the formation of the product resulting from the reaction.

The stirring means may be rotative, and its rotation speed is controllable by electronic means. The stirring means may also have blades with a tilt between 80 and 100°, optionally 90°, may have from two to four blades, such rotation and tilt promoting the chemical precipitation and the coagulation-flocculation of the resulting product.

The station may additionally comprise an overflow control member and a second drainage outlet, and wherein the first reservoir comprises a third water outlet, the overflow control member is arranged inside the first reservoir and connected to the third water outlet such that, when the water inside the first reservoir reaches a predefined volume, it enters the overflow control member and exits through the third water outlet into the second drainage outlet.

Each valve may be controllable by electronic means.

The first and second reservoirs may be installed in at least one bench, that bench being movable, optionally by means of wheels installed in a lower face of the bench.

The present disclosure does additionally comprise a water treatment method in the water treatment station of the present disclosure. The method comprises the following steps:
- obtain contaminated water in the first reservoir,
- add at least one reagent to the contaminated water inside the first reservoir to obtain a mixture, the mixture thus inducing a reaction, as a chemical precipitation reaction, and forming waste,
- wait for the deposition of waste resulting from the reaction at the bottom of the first reservoir,
- open the water outlet of the first reservoir and obtain water treated for contaminants in the second reservoir.

The contaminated water in the first reservoir may be obtained by means of:
pumping demineralized or previously treated water from the water inlet of the station to the first reservoir and adding a contaminant to the first reservoir,
adding demineralized water directly to the first reservoir and adding a contaminant to the first reservoir, or
pumping water with a previously added contaminant, from the water inlet of the station to the first reservoir.

The method may be such that the water flowing out from the first reservoir to the inlet of the second reservoir is carried out by gravitational action, when the third valve is open.

The method may additionally include the determination of a water flow between the water inlet of the station and the first reservoir, and the water pumping may be performed on the basis of that determined flow.

The method may additionally include the determination of the water volume contained inside the second reservoir. Optionally, the water volume contained inside the second reservoir may be obtained based on the determination of the hydrostatic water pressure inside the second reservoir, for instance, based on a level sensor arranged on the outlet of the second reservoir. The method may additionally include the activation of an aeration pump arranged inside the second reservoir such that, when the water is therein, the air from the aeration pump contacts the water. The method may thus include the steps of
obtaining water with a biological contaminant in the second reservoir,
adding chlorine to the water contaminated with a biological contaminant and/or activating the air pumping during a predefined period of time.

The method may additionally comprise the step of, after opening the water outlet on the first reservoir and obtaining water treated for contaminants in the second reservoir, opening the second valve, allowing the waste deposited in the lower portion of the first reservoir to exit the station through the waste outlet.

The method may further comprise the water flowing out of the second reservoir to a first drainage outlet connected to the outlet of the second reservoir, a fourth valve allowing the water to flow out from the second reservoir to the first drainage outlet when a fifth valve is closed and the fourth valve is open. The fifth valve allows the outflow of water from the outlet of the second reservoir to the water outlet of the station when the fifth valve is open and the fourth valve is closed.

The method may additionally comprise the activation of the mechanical stirring means inside the first reservoir.

### DESCRIPTION OF THE FIGURES

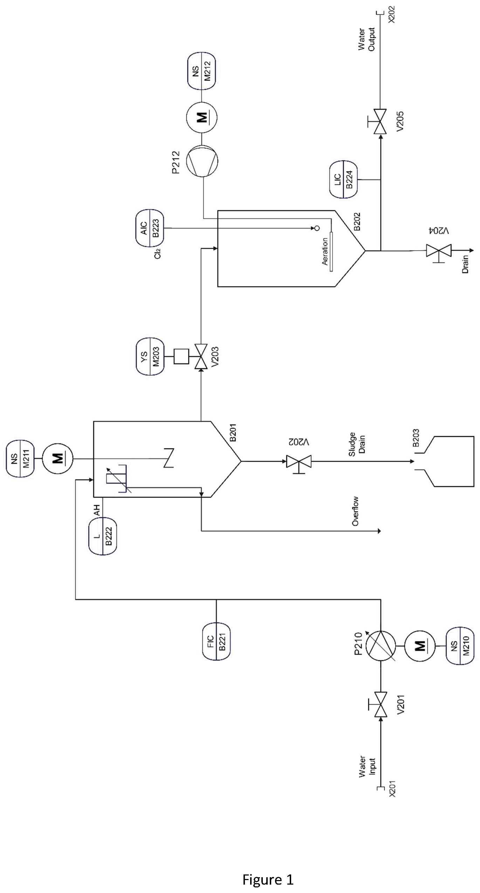

Figure 1- a schematic representation of a station according to the present disclosure. The station comprises a first reservoir (B201), the outlet of which on the side face thereof being connected to an electronically controlled outlet valve (V203) for the inlet of a second reservoir (B202).

The station comprises one water inlet (X201) connected to a first water supply valve (V201), the said water being pumped by the first pump (P210) into the first reservoir (B201) controlled and measured by means of a flow meter (B221). When a first valve (V201) is open and the first pump (P210) is operating, the water from the water inlet of the station (X201) flows into the first reservoir (B201).

The present disclosure comprises two operating modes. One operating mode wherein the pretreated water from another upstream station with water flowing in through inlet (X201), and an isolated operating mode [the water does not come from inlet (X201), but is rather directly fed into the reservoir (B201)]. A chemical reagent and/or a synthetic and/or biological sample may be added and dissolved through an agitator (M211) controlled by electronic means, and arranged inside the first reservoir (B201), such that it contacts the medium inside the first reservoir (B201), promoting the chemical process, and allowing the optimization of the reaction and consequent formation of a reaction product.

In the first reservoir, some chemical and/or biological synthetic samples (contaminant) are added, the solution is stirred by means of a stirrer (M211) controlled by electronic means and, through the inclusion of chemical reagents that promote precipitation and/or coagulation-flocculation reactions and from that stirring and due to gravity, the waste formed by the precipitation and/or coagulation-flocculation reaction is deposited at the bottom of the first reservoir (B201).

A third valve (V203) may be opened so that the water treated for the chemical contaminant may flow into the second reservoir (B202) by gravitational action, controlling the passage of the water treated for the chemical contaminant. The deposited waste may exit through the lower portion of the first reservoir (B201) as the waste leaves the station (B203) upon the opening of a second valve (V202) after the removal of the pretreated waters through the third valve (V203) controlled by electronic means. The station may comprise a level sensor (B224) to control the efficiency of the number of pretreated waters.

The station may additionally comprise one drainage outlet (Drain) through a fourth valve (V204). A fifth valve (V205) allows the outflow of water from the outlet of the second reservoir to the water outlet of the station (X202) when the fifth valve (V205) is open and the fourth valve (V204) is closed. The fourth valve (V204) allows the outflow of water from the second reservoir (B202) to the first drainage outlet (Drain) when the fifth valve is closed (V205) and the fourth valve (V204) is open.

The station comprises, in the second reservoir (B202), an aeration pump (P212) and an online chlorine meter (B223).

An overflow control member is arranged inside the first reservoir (B201) and connected to a third water outlet (Overflow) of the first reservoir (B201), such that, when the water inside the first reservoir (B201) reaches a predefined volume, it goes into the overflow control member and exists through the third water outlet (Overflow). The discharge of the waste deposited is formed in a lower section of the first reservoir (B201). The outlet for the water treated for a chemical contaminant is on a side section of the first reservoir (B201).

### DETAILED DESCRIPTION

The station of the present disclosure defines a miniaturized system, which may be movable, to digitally monitor and control water treatment. Monitoring and control may be in real time with augmented reality.

This station allows for the treatment of waters contaminated by chemical precipitation or by coagulation-flocculation.

The water from the water inlet of the station may be demineralized water or water that was previously treated for one or more contaminants in a previous treatment station.

To perform the water treatment, the station comprises at least two suitable reservoirs to hold liquids, one first reservoir (B201) with at least one water inlet and one water outlet, the water outlet being formed in a side section of the first reservoir (B201), and a second reservoir (B202) with at least one water inlet and one water outlet.

The first reservoir (B201) does further comprise a waste outlet (B203, Sludge Drain), it is formed at the lower section thereof and is suitable for the removal of the waste deposited at least by gravitational action. A water outlet of the first reservoir (B201) is connected to the water inlet of the second reservoir (B202) and a water outlet of the second reservoir (B202) is connected to a water outlet of the station (X202).

Thus, the outlets of the first reservoir (B201) are as follows:
one water outlet, intended for the outflow of the water treated for contaminants, which allows the outflow of water to the second reservoir (B202) and hence from the station, and
a waste outlet, from which is extracted the waste resulting from a reaction induced inside the first reservoir (B201) and which generates a sedimentation of waste.

The station does yet comprise a first valve (V201) and a first pump (P210). The first valve (V201) is controllable and allows the water to flow from the water inlet of the station (X201) to the first reservoir (B201). The first pump (P210) is also controllable, to pump water from the water inlet of the station (X201) to the water inlet of the first reservoir. The station may comprise at least one microcontroller configured to control the operation of the members thereof, i.e. valves and pumps, as the first valve (V201) and the first pump (P210).

Thus, contaminated water may be obtained inside the first reservoir (B201) through
pumping demineralized or pretreated water from the water inlet of the station to the first reservoir and adding a contaminant in the first reservoir (B201),
adding demineralized water directly to the first reservoir and adding one contaminant in the first reservoir (B201), or
pumping water with a previously added contaminant from the water inlet of the station to the first reservoir (B201).

A possible operation will involve the connection of the water inlet of the station (X201) to a source of water, from which the water is pumped. Such a source of water may consist in a reservoir of water or a previous water treatment station, wherein waters contaminated with a contaminant were already treated for that contaminant.

The station additionally comprises a third controllable valve (V203) which allows the outflow of water from the first reservoir (B201) to the inlet of the second reservoir (B202). The control of the third valve (V203) allows that, after a reaction has been completed inside the first reservoir (B201) and a product of that reaction has settled at the bottom of the first reservoir (B201), the third valve (V203) opens so that the treated water for contaminants flows from the first reservoir (B201) to the second reservoir (B202).

Each reservoir has a capacity between 4 and 50 I, optionally 4 and 15 I, optionally 6 and 9 I.

The outflow of water from the first reservoir (B201) to the inlet of the second reservoir (B202) may be carried out by gravitational action, when the third valve (V203) is open.

The station may comprise a flow meter (B221). The station may be configured to stop the operation of the first pump (P210) when the value obtained by the flow meter (P221) is greater than or equal to a predefined value. The station may be configured to maintain the operation of the first pump (P221) when the value obtained by the flow meter (B221) is lower than or equal to a predefined value. As an example, the predefined value may correspond to a maximum volume, this maximum volume corresponding to a total volume of the first reservoir (B201) or to a pre-established volume to conduct an experiment in the first reservoir (B201).

This station allows for, in the first reservoir (B201) - which may be defined as being the main reservoir -, the placement of synthetic samples and the addition of chemical reagents, each by means of an independent separating funnel connected to the first reservoir (B201) or directly in the first reservoir (B201), according to the water and wastewater parameters, recreating the real procedures in water treatments, namely in reducing the pollutant load, both in suspended and dissolved form, present in wastewater.

The station may additionally comprise an aeration pump (P212) arranged inside the second reservoir (B202) such that, when there is water inside the second reservoir (B202), the air of the aeration pump (P212) contacts the water. Thus, the second reservoir (B202) allows the simulation of the growth of harmless bacteria, in a learning context, with collection of samples and microbiological analysis of the water. The second reservoir (B202), when combined with the aeration pump (P212), allows the control of the growth of these bacteria, by pumping air and adding chlorine, verifying the effectiveness of the treatment together or separately.

The station may comprise a second controllable valve (V202) that allows the exit of the waste deposited at the bottom of the first reservoir (B201) through the waste outlet and towards a waste outlet of the station (B203). The second valve (V202) opens, allowing the exit of the waste, after the third valve (V203) is
open, allowing the water treated for contaminants to flow out through the side outlet of the first reservoir (B201), and
closed immediately after or after the level of water and waste inside the first reservoir (B201) has fallen below the water outlet of the first reservoir (B201).

The station comprises a first drainage outlet (Drain), a fourth valve (V204) and a fifth valve (V205). Its operation allows the management of the water exit from the station.

The first drainage outlet (Drain) is connected to the outlet of the second reservoir (B202), to allow the exit of water from the station avoiding the exit of water from the station (X202).

The fourth valve (V204) is controllable and allows the outflow of water from the second reservoir (B202) to the first drainage outlet (Drain) when the fifth valve (V205) is closed and the fourth valve (V204) is open. This operation shall occur when, e.g., the water inside the second reservoir (B202) is to be discarded.

Thus, the fifth valve (V205) is likewise controllable, and allows the outflow of water from the outlet of the second reservoir (B202) to the water outlet of the station (X202) when the fifth valve (V205) is open and the fourth valve (V204) is closed. This is the most common operation of the station of the present disclosure, which will deliver the treated water for contaminants and/or for bacteria at the water outlet of the station (X202).

Each valve may be controllable by electronic means.

The station may comprise stirring mechanical means (M211), controllable by electronic means and arranged inside the first reservoir (B201) as a facilitator means for the chemical process that shall be performed inside the first reservoir (B201).

When there is a mixture of water contaminated with a contaminant and a chemical reagent suitable to react with that contaminant inside the first reservoir (B201), the stirring means may be activated for stirring the mixture.

Such stirring promotes the chemical process (for instance, a precipitation and coagulation-flocculation process) and it optimizes the formation of waste resulting from the reaction. Such waste may be then removed, after sedimentation at the bottom of the first reservoir, by means of the previously described process.

The stirring means (M211) may be rotative, its rotation speed being controllable by electronic means. The rotation may correspond to
one rotation by rapid stirring, between 100 and 250 rpm,
one rotation by moderate stirring, between 30 and 99 rpm
   and/or
one rotation by slow stirring, between 10 and 29 rpm.

The stirring means (M211) may still have paddles with a tilt between 80 and 100°, optionally 90°, may have from two to four blades, the rotation and tilt promoting the chemical precipitation and the coagulation-flocculation of the resulting product.

This combination does also allow for the reading of the water turbidity throughout its process with the help of portable equipment and collected by an auxiliary hole. The system allows the viewing of the formation, growth and decantation of flocs, as well as the behaviour of flocs influenced by the speed of the electromechanical stirrer with a Servo Drive and an air opening to remove the air from the circuit, as a real learning procedure.

The station further comprises an overflow control member and a second drainage outlet (Overflow), and wherein the first reservoir (B201) has a third water outlet. The overflow control member is arranged inside the first reservoir (B201) and is connected to the third water outlet such that when the water inside the first reservoir (B201) reaches a predefined volume, it enters the overflow control member and exits through the third water outlet towards the second drainage outlet (Overflow), thus avoiding the overflow of excess water from the first reservoir (B201). This measure prevents the contaminated water from escaping without any control from inside the first reservoir (B201).

The overflow member may be a telescopic overflow, adjustable by a mechanized or manual rod, according to the collection of suspended particles, with a selective drainage and a maximum safety function, without questioning the safety in the learning and research environment.

The station of the present disclosure is, therefore, based on a storage system in the main reservoir - the first reservoir (B201) -, equipped with an electromechanical stirrer (M211) and a dynamic control by servo motor with adjustment of the paddles angle. The second reservoir (B202) may be equipped with an online measuring bloc to analyse the characteristics of the water such as pH and free chlorine.

The station of the present disclosure may comprise one or more controllers that include computer means configured to control some elements such as valves, pumps and/or stirring means. It may also obtain monitoring data from said sensors.

The present disclosure can, likewise, comprise a system that includes the station of the present disclosure and a remote or local controller. The remote or local controller may be configured to allow the access to a human-machine interface (HMI) that allows the activation of control commands from the station of the present disclosure, by human action and/or automatically.

Hence, the station may be controlled automatically by means of software, as if it were a treatment station, but also individually, giving way to the scientifical development and the research of better procedures, methods and good practice.

This controller, configured with a controlling software, has also the ability to collect data, enabling the parameterisation and activation of all elements in the station, and these may be viewed in schematic or 3D form according to predefined representation norms.

The collection of data allows a direct intervention in improving the process in real time or to be used in integrated form with Machine Learning.

Thus, this station may be equipped with a set of online sensors and actuators to allow the control of the continuous process, as well as the analysis of the preliminary characteristics of raw water and final treated water, such as pH, conductivity and free chlorine.

Each sensor or actuator may be installed on a face of a corresponding reservoir, for instance, on a side face or on an upper face. The upper face may be formed by a reservoir cover, therefore removable from the reservoir.

The elements of the station of the present disclosure, such as reservoirs, inlets and outlets, pumps or valves, may be connected by piping and corresponding coupling members. Those pipes and corresponding coupling members may be standardised.

The pipes, sensors, actuators and fixing brackets, may be coupled by coupling members of the quick connect type, allowing easy configurations, without the help of special tools and with the aim to also provide extended competences in learning and research.

The method to treat waters of the present disclosure consists in a method for the treatment of waters in the water treatment station of the present disclosure.

The method comprises the following steps:
- obtain contaminated water in the first reservoir,
- add at least one reagent to the contaminated water inside the first reservoir (B201) obtaining a mixture, the mixture thus inducing a reaction, as a reaction of chemical precipitation, and forming waste,
- wait for the settlement of waste resulting from the reaction at the bottom of the first reservoir (B201),
- open the water outlet of the first reservoir (B201) and obtain water treated for the contaminant in the second reservoir (B202).

The contaminated water in the first reservoir (B201) may be obtained through:
pumping demineralized or pretreated water from the water inlet of the station to the first reservoir (B201) and adding a contaminant to the first reservoir (B201),
adding demineralized water directly to the first reservoir (B201) and addition of a contaminant to the first reservoir (B201), or
pumping the water with a previously added contaminant from the water inlet of the station to the first reservoir (B201).

The method may be such that the water outlet from the first reservoir (B201) to the inlet of the second reservoir (B202) is carried out by gravitational action, when the third valve (V203) is open. In this case, the arrangement between the first reservoir (B201) and the second reservoir (B202) is such that, when the third valve (V203) is open, the water treated in the first reservoir (B201) for contaminants flows into the second reservoir (B202).

The method may be such that the water flowing out from the first reservoir (B201) to the inlet of the second reservoir (B202) is carried out by gravitational action, when the third valve is open. The method may further include the determination of a water flow between the water flowing from the station (X201) and the first reservoir (B201), and the water pumping may be performed based on that determined flow.

The pumping of water into the first reservoir (B201) may be stopped when the flow value determined for a period of time is greater or equal to a predefined value. The water pumping into the first reservoir (B201) may be maintained when the determined flow value for a period of time is lower or equal to a predefined value. As an example, the predefined value may correspond to a maximum volume, such maximum volume corresponding to a total volume of the first reservoir (B201) or to a preestablished volume for an experiment to be performed in the first reservoir (B201).

The method may additionally include the determination of the water volume contained inside the second reservoir (B202). Optionally, the water volume contained inside the second reservoir may be obtained on the basis of determining the hydrostatic water pressure inside the second reservoir (B202), e.g. based on a level sensor (B224) arranged at the outlet of the second reservoir (B202). This information allows the monitoring of the water volume contained inside the second reservoir (B202).

The method may additionally comprise the steps of:
obtaining water with a biological contaminant in the second reservoir (B202),
adding chlorine to the contaminated water with a biological contaminant and/or activating the air pumping during a predefined period of time.

Thus, the second reservoir (B202) allows to simulate the growth of harmless bacteria in a learning context, with collection of samples and a microbiological analysis of the water. The second reservoir (B202), when paired with aeration pump (P212) permits to control the growth of these bacteria, through air pumping and addition of chlorine, verifying the effectiveness of the treatment together or separately.

As a method for the treatment of waters in the water treatment station of the present disclosure, it may, specifically, include the following steps:
- Add demineralized water to the first reservoir as a solid and neutral basis, and as the necessary quantity to perform the experiments
- Activate and regulate the mechanical stirrer according to experience and research to ensure the homogenisation of the contaminant added in the next step.
- Add a chemical and/or biological synthetic sample
- Add a chemical reagent to the first reservoir.
- Regulate the mechanical stirrer according to the reagent.
- Wait for the precipitation and coagulation-flocculation process of the occurring waste and the sedimentation thereof at the bottom of the first reservoir.
- Open the water outlet of the first reservoir to obtain pretreated water at the water outlet of the station.
- Open the outlet for the waste deposited on the lower portion of the first reservoir.
- Carry out a chemical analysis of the collected waste in the first reservoir.
- Carry out a chemical and/or biological analysis of the pretreated and collected waters in the second reservoir.
- Carry out a microbiological analysis of the growth of bacteria in the second reservoir
- Activate the aeration system and/or the addition of chlorine, or not.
- Continuously measure the presence and quantity or concentration of chlorine
- Verify the effectiveness of the microbiological treatment.

As a method to treat waters in the water treatment station of the present disclosure, it may, alternatively, specifically include the following steps:
- Open the water inlet of the station of the present disclosure to obtain contaminated water from the previous station, pumping the right amount of water to the first reservoir, programmed according to the experiment to be performed.
- Add a chemical and/or biological synthetic sample, or not.
- Activate and regulate the mechanical stirrer according to experience and research to ensure the homogenisation of the chemical reagent added in the following step.
- Add a chemical reagent to the first reservoir.
- Regulate the mechanical stirrer according to the reagent.
- Wait for the precipitation and coagulation-flocculation process of the present waste and their deposition at the bottom of the first reservoir.
- Open de water outlet of the first reservoir to obtain pretreated water at the water outlet of the station.
- Open the outlet for the waste deposited on the lower portion of the first reservoir.
- Carry out a chemical analysis on the collected waste in the first reservoir.
- Carry out a chemical and/or biological analysis to the pretreated and collected waters in the second reservoir.
- Carry out a microbiological analysis of the growth of bacteria in the second reservoir
- Activate the aeration system and/or the addition of chlorine, or not.
- Continuously measure the presence and quantity or concentration of chlorine.
- Verify the effectiveness of the microbiological treatment.
- Carry out the analysis to the waste collected in the first reservoir.

Thus, the station and the method of the present disclosure enable the formation and or experimentation of the following activities:
- Control the speed of electric motors, in the coagulation and flocculation process, according to the international standard.
- Level measurement using different types of sensors.
- Control of the continuous processes and process energy efficiency.
- Excessive energy consumption and countermeasures.
- Efficiency of electric actuators.
- Causes of turbidity in water.
- Study of the growth and inactivation of anaerobic bacteria by aeration and/or chlorination
- Analysis of the factors affecting sedimentation.
- Analysis and quantification of the turbidity before and after the process.
- Standard coagulation, flocculation and sedimentation process.
- Analysis of symbology and DTI scheme according to EN 62424:2010-01 and ISO 10628.

In an example, the station of the present disclosure may include:
- two or more transparent water reservoirs with 7 litres capacity to allow the viewing of experiments, with no influence on learning, with a connection interface and holes to collect the samples,
- sensors,
- actuators,
- water aeration pump,
- fittings, fastening and pipework with quick connections,
- electromechanical stirrer with adjustable paddles, with regard to the tie rod and angle of attack, equipped with a speed control drive, according to the experiences and to the mixture of synthetic samples and reagents,
- hardware-based online measuring unit with, with a pH sensor equipped with a compatible I/O interface,
- hardware-based online measuring unit with a chlorine sensor equipped with a compatible I/O interface,
- portable measuring equipment for analysing pH, conductivity, free and total chlorine, colour and turbidity,
- chemical reagents developed to guarantee the stoichiometric quantities for synthetic samples,
- process control device, data collection and Internet of Things (IoT).

Synthetic samples, comprising contaminants and reagents based on the principles of oxidation-reduction, may be associated to the station and to the method of the present disclosure for the implementation thereof. These are parameterised to represent waters, waste waters and industrial processes like textiles and metallurgy.

In several embodiments, the station, the method, and/or the elements thereof, include components to execute at least some of the examples of resources and features of the methods described, either by means of *hardware* components (like memory and/or processor), *software* or any combination thereof.

In several embodiments, a station controller may consist or comprise a microcontroller, with the ability to receive external data through inputs and provide triggers for outputs, based on configured rules and/or predefined programming.

An article for use with the station and/or the method, as a prerecorded storage device or other similar computer-readable means, including program instructions recorded therein, or a computer data signal carrying computer-readable programme instructions, may direct a device to facilitate the implementation of the methods described herein. It is understood that such devices, manufacturing items and computer data signals are also within the scope of the present disclosure.

A "computer-readable means" stands for any means that is likely to store instructions to be used or executed by a computer or any other computation device, including a server, a read-only memory (ROM), an erasing programmable read-only memory (EPROM) or a flash memory, a random access memory (RAM), a portable disk, a hard disk drive (HDD), a solid-state storage device (e.g. NAND flash or synchronous dynamic RAM (SDRAM)) and/or an optical disk, as a *Compact Disk* (CD), *Digital Versatile Disk* (DVD) or Blu-Ray ^{™} *Disk.*

As will be clear to the person skilled in the art, the present disclosure should not be limited to the embodiments described herein, and various changes are possible which remain within the scope of the present disclosure.

Naturally, the embodiments presented above may be combined, in the different possible forms, and repetition of all these combinations is avoided herein.

## Claims

1. A miniaturized water treatment station, the station comprising at least two reservoirs suitable to contain liquids, a first reservoir (B201) and a second reservoir (B202), wherein:
the second reservoir (B202) comprises at least one water inlet and one water outlet,
the first reservoir (B201) comprises at least one water inlet and one water outlet, the water outlet being formed on a side section of the first reservoir (B201), and further comprising a waste outlet, the waste outlet being formed in a lower section of the first reservoir and being suitable to remove the waste deposited at least by gravitational action,
the water outlet of the first reservoir (B201) being connected to the water inlet of the second reservoir (B202), and wherein the water outlet of the second reservoir (B202) is connected to one water outlet of the station (X202),
the station comprises a first valve (V201) and a first pump (P210), the first valve being controllable and allowing the water to flow into the first reservoir (B201), and the first pump (P210) is controllable, a pumping of the first pump (P210) being performed from a water inlet of the station (X102) to the water inlet on the first reservoir (B201), and the station further comprises a third valve (V203), the third valve (V203) being controllable and allowing the water to flow from the first reservoir (B201) to the inlet of the second reservoir (B202), wherein each of the reservoirs has a capacity between 4 and 50 I,
the station being configured such that the outflow of water from the first reservoir (B201) to the inlet of the second reservoir (B202) is performed by gravitational action, when the third valve (V203) is open.

2. A station according to the previous claim wherein it is configured to, after a reaction has been completed inside the first reservoir (B201) and a product of that reaction has settled at the bottom of the first reservoir (B201), the third valve (V203) opens so that the treated water for contaminants flows from the first reservoir (B201) to the second reservoir (B202).

3. A station according to any one of the preceding claims, the station further comprising a second valve (V202), the second valve (V202) being controllable and allowing the exit of the waste deposited at the bottom of the first reservoir (B201) through the waste outlet and into a waste outlet of the station (B203), the station being configured for the second valve (V202) to allow the exit of waste after the third valve (V203) allows the water to flow out.

4. A station according to any one of the preceding claims, wherein it further comprises a first drainage outlet (Drain), a fourth valve (V204) and a fifth valve (V205), the first drainage outlet (Drain) being connected to the outlet of the second reservoir (B202), the fourth valve (V204) being controllable and allowing the water to flow from the second reservoir (B202) to the first drainage outlet (Drain) when the fifth valve (V205) is closed and the fourth valve (V204) is open, and/or the fifth valve (V205) is controllable and allows the outflow of water through the outlet of the second reservoir (B202) for the water to flow out of the station (X202) when the fifth valve (V205) is open and the fourth valve (V204) is closed.

5. A station according to any one of the preceding claims, wherein it further comprises a flow meter (B221) arranged between a water inlet of the station (X201) and the first reservoir (B201), the first pump (P210) pumping the water according to at least a value obtained by the flow meter (B221).

6. A station according to any one of the preceding claims, wherein it further comprises the means to determine the water volume contained inside the second reservoir (B224) and, optionally, the means to determine the water volume contained inside the second reservoir (B202) comprise a level sensor (B224) arranged at the outlet of the second reservoir (B202) and configured to determine the hydrostatic water pressure inside the second reservoir (B202), determining the water volume contained inside the second reservoir (B202) based on the value of hydrostatic water pressure obtained by the level sensor (B224).

7. A station according to any one of the preceding claims, wherein it further comprises an aeration pump (P212) arranged inside the second reservoir (B202) such that, when the water is inside the second reservoir (B202), the air of the aeration pump contacts the water.

8. A station according to any one of the preceding claims, the station further comprising mechanical stirring means (M211), controllable by electronic means and arranged inside the first reservoir (B201) as a facilitator means for a chemical process to be performed inside the first reservoir (B201).

9. A station according to the previous claim, wherein the stirring means (M211) is rotative, the rotation speed thereof being electronically controllable and, optionally, the stirring means has paddles with a tilt between 80 and 100°, optionally 90° and, optionally, having two to four paddles.

10. A station according to any one of the preceding claims, further comprising an overflow control member and a second drainage outlet (Overflow), and wherein the first reservoir (B201) comprises a third water outlet, the overflow control member being arranged inside the first reservoir (B201) and connected to the third water outlet, such that, when the water inside the first reservoir (B201) reaches a predefined volume, it enters the overflow control member and exits through the third water outlet into the second drainage outlet (Overflow).

11. A station according to any one of the preceding claims, wherein each valve is electronically controllable.

12. A station according to any one of the preceding claims, wherein the first reservoir (B201) and the second reservoir (B202) are installed in at least one bench, such bench being movable, optionally through wheels installed on a lower face of the bench.

13. A method for the treatment of waters in the water treatment station of any of the previous claims, the method comprising the following steps:
• obtain contaminated water in the first reservoir (B201),
• add at least one reagent to the contaminated water contained in the first reservoir (B201) obtaining a mixture, the mixture thus inducing a reaction, like a chemical precipitation reaction, and forming waste,
• wait for the deposition of the waste resulting from the reaction at the bottom of the first reservoir (B201),
• open the water outlet of the first reservoir (B201) and obtain water treated for contaminants in the second reservoir (B202).

14. A method according to the previous claim wherein the contaminated water in the first reservoir (B201) is obtained by means of:
pumping the demineralized or previously treated water from the water inlet of the station to the first reservoir (B201) and adding a contaminant to the first reservoir (B201),
adding demineralized water directly to the first reservoir (B201) and adding a contaminant to the first reservoir (B201), or
pumping de water having a previously added contaminant from the water inlet of the station to the first reservoir (B201).

15. A method according to any one of the claims 13-14 wherein the water flowing out from the first reservoir (B201) to the inlet of the second reservoir (B202) is carried out by gravitational action, when the third valve (V203) is open.
